(19) Europäisches Patentamt

European Patent Office

Office européen des brevets

(11) Veröffentlichungsnummer: **0 359 835**
**A1**

(12) **EUROPÄISCHE PATENTANMELDUNG**

(21) Anmeldenummer: **88114965.2**

(22) Anmeldetag: **14.09.88**

(51) Int. Cl.⁵: **B29C 45/26**

(43) Veröffentlichungstag der Anmeldung:
**28.03.90 Patentblatt 90/13**

(84) Benannte Vertragsstaaten:
**FR IT**

(71) Anmelder: **Enrietti, Leo**
**Rue Perloz 52**
**I-11020 Pont St. Martin(IT)**

(72) Erfinder: **Enrietti, Leo**
**Rue Perloz 52**
**I-11020 Pont St. Martin(IT)**

(54) **Spritzgiesswerkzeug.**

(57) Ein Spritzgießwerkzeug zur Herstellung von länglichen Streifen oder Bändern, insbesondere Kabelbändern aus hartelastischem Kunststoff, besteht im wesentlichen aus zwei zusammenfügbaren Werkzeughälften (1 und 2) mit den entsprechenden Formhohlräumen (5) für die Kabelbänder sowie einem Einspritzkanal (3) für das Spritzgut und Auswerferstangen (9) zum Ausstoßen der abgespritzten Bänder.

Um die für das Zusammenhalten der Werkzeughälften erforderliche Schließkraft möglichst niedrig zu halten, sind die Formhohlräume (5) mit ihren Schmalseiten (7, 8) in Entformungsrichtung der düsenseitigen Werkzeughälfte (1) ausgerichtet, wobei die Düsen (4) des Einspritzkanals (3) in die in der Trennebene "E" liegenden Schmalseiten (7) münden.

FIG. 1

## Spritzgießwerkzeug zur Herstellung von Kabelbändern

Die Erfindung betrifft ein Spritzgießwerkzeug zur Herstellung von länglichen Streifen oder Bändern, insbesondere Kabelbändern aus hartelastischem Kunststoff, bestehend aus zwei zusammenfügbaren Werkzeughälften mit den entsprechenden Formhohlräumen für die Kabelbänder sowie einem Einspritzkanal für das Spritzgut und Auswerferstangen zum Ausstoßen der abgespritzten Bänder.

Die Formhohlräume von Kabelbändern werden aus Entformungsgründen üblicherweise so in den Werkzeughälften angeordnet, daß deren Breitseiten in Entformungsrichtung der Werkzeughälften gerichtet sind und die von der Spritzdüse beaufschlagte Breitseite möglichst in der Trennebene zwischen den beiden Werkzeughälften liegt. Diese Lage in der Gießform hängt wohl damit zusammen, daß Kabelbänder aus Festigkeitsgründen seitlich zwei durchgehende Randstreifen aufweisen, zwischen denen die Rastzacken versenkt angeordnet sind.

Der Nachteil dieser Anordnung der Formhohlräume ist jedoch, daß wegen des sich in der Trennebene zwischen den Werkzeughälften aufbauenden Spritzgießdruckes eine entsprechend große Schließkraft auf die beiden Werkzeughälften aufgebracht werden muß, um diese geschlossen zu halten. Da die Gießwerkzeuge in der Regel auch noch mehrere Nester haben, ergibt sich entsprechend der Zahl der Nester ein Vielfaches an Spritzdruckflächen, so daß die zugehörige Spritzgießmaschine eine besonders große Schließkraft aufbringen muß.

Aufgabe der Erfindung ist es, die Spritzgießwerkzeuge für die Herstellung von Kabelbändern und dergleichen länglicher Streifen oder Bänder so zu gestalten, daß zum Zusammen halten der Werkzeughälften eine niedrigere Schließkraft erforderlich ist und somit die Herstellung von Kabelbändern auch auf kleineren Spritzgießautomaten möglich wird.

Zur Lösung dieser Aufgabe wird vorgeschlagen, die Formhohlräume mit ihren Schmalseiten in die Entformungsrichtung der Werkzeughälften auszurichten und den Einspritzkanal in eine der beiden Schmalseiten einmünden zu lassen. Durch diesen einfachen Trick wird erreicht, daß die Spritzdruckflächen im Verhältnis der Schmalseitenfläche zur Breitseitenfläche verringert und dementsprechend auch die erforderliche Schließkraft deutlich gesenkt wird. Außerdem ergibt sich noch der weitere Vorteil, daß die hochkantstehenden Formhohlräume weniger Platz benötigen und dadurch eine größere Anzahl Nester im Werkzeug untergebracht werden kann.

In der Zeichnung ist ein Ausführungsbeispiel des erfindungsgemäßen Werkzeugs mit zwei Formhohlräumen dargestellt und soll nachfolgend näher erläutert werden.

Es zeigt

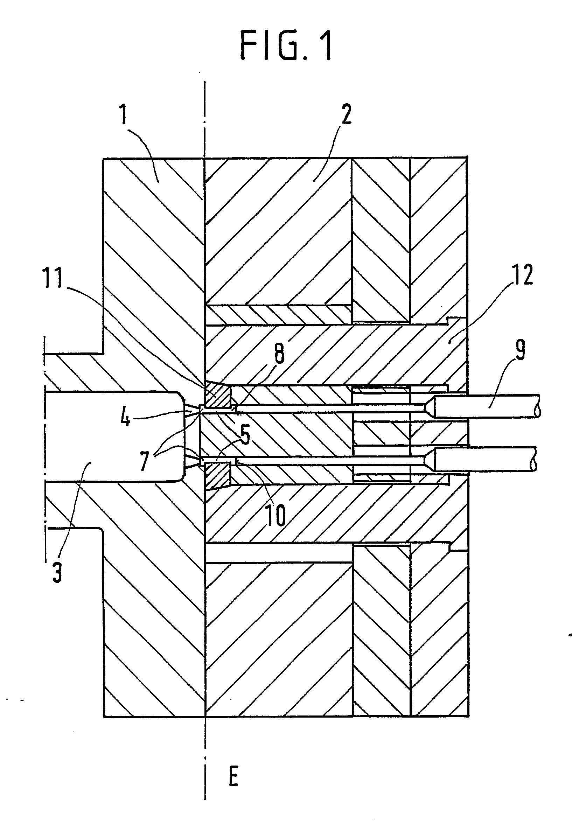

Fig. 1 einen Schnitt durch das geschlossene Werkzeug vor dem Abspritzen und

Fig. 2 einen Schnitt durch das geöffnete Werkzeug nach dem Abspritzen.

Das in den Figuren schematisch dargestellte Spritzgießwerkzeug besteht aus zwei Werkzeughälften 1 und 2, die in einem nicht gezeigten Spritzgießautomaten in üblicher Weise zusammengehalten werden.

In der links dargestellten ortsfesten Werkzeughälfte 1 befindet sich ein Einspritzkanal 3, durch welchen das aufgeheizte Spritzgut zugeführt wird. Der Einspritzkanal 3 mündet mit sogenannten Spritzdüsen 4 in die Formhohlräume 5 des abzuspritzenden Kabelbandes 6.

Diese Formhohlräume 5 sind in der rechts dargestellten, beweglichen Werkzeughälfte 2 so eingebettet, daß ihre Schmalseiten 7 in die Entformungsrichtung der düsenseitigen Werkzeughälfte 1 ausgerichtet sind. Die Düsen 4 des Einspritzkanals 3 münden hierbei in die in der Trennebene "E" liegenden Schmalseiten 7. An den rückseitigen Schmalseiten 8 befinden sich - über die Länge des Formhohlraumes 5 verteilt - mehrere Auswerferstangen 9, welche rechteckige Stirnseiten 10 aufweisen, deren Dicke den vorgenannten Schmalseiten 8 des Formhohlraumes 5 entspricht.

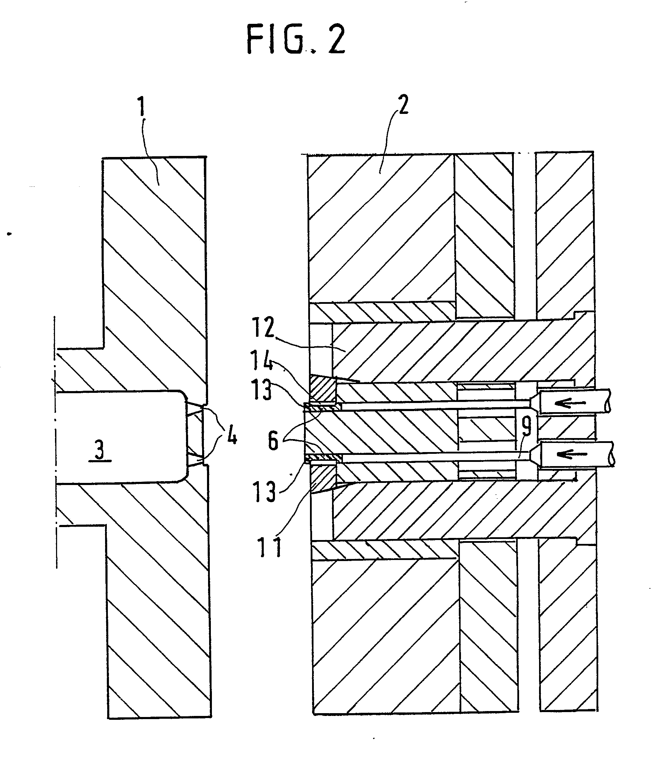

Da die Zacken 14 des Kabelbandes 6 üblicherweise zwischen seitlichen Randstreifen 13 etwas versenkt sind, werden noch zwei als Schieber ausgebildete Formkerne 11 benötigt, die durch an ihrem Ende abgeschrägte Dorne 12 im Schließzustand gehalten werden. Nach dem Abspritzen der Kabelbänder 6 werden diese Dorne 12 etwas zurückgefahren (Fig. 2), so daß die Formkerne 11 parallel zur Trennebene "E" von den Zacken 14 weggeführt werden. Die gespritzten Bänder 6 können nun von den Auswerferstangen 9 in Pfeilrichtung ausgestoßen werden, nachdem die bewegliche Werkzeughälfte 2 vorher zurückgefahren worden ist.

## Ansprüche

1. Spritzgießwerkzeug zur Herstellung von länglichen Streifen oder Bändern, insbesondere Kabelbändern aus hartelastischem Kunststoff, bestehend aus zwei zusammenfügbaren Werkzeughälften mit den entsprechenden Formhohlräumen für die Kabelbänder sowie einem Einspritzkanal für das Spritzgut und Auswerferstangen zum Ausstoßen der abgespritzten Bänder,

**dadurch gekennzeichnet**, daß

die Formhohlräume (5) mit ihren Schmalseiten (7, 8) in Entformungsrichtung der düsenseitigen Werkzeughälfte (1) ausgerichtet sind und der Einspritzkanal (3) in eine (7) der beiden Schmalseiten mündet.

2. Spritzgießwerkzeug nach Anspruch 1, dadurch gekennzeichnet, daß die düsenseitige Schmalseite (7) des Formhohlraums (5) etwa in der Trennebene "E" der beiden Werkzeughälften (1 und 2) liegt.

3. Spritzgießwerkzeug nach Anspruch 1 oder 2, dadurch gekennzeichnet, daß die an der rückseitigen Schmalseite (8) angeordneten Auswerfer (9) rechteckige Stirnflächen (10) aufweisen, deren Dicke den Schmalseiten (8) des Formhohlraumes (5) entspricht.

# FIG. 1

# FIG. 2

## EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | JP-A-63 120 619 (MITSUBISHI METAL CORP.) * Zusammenfassung * & PATENT ABSTRACTS OF JAPAN, Band 12, Nr. 364 (M-747)[3211], 29. September 1988 --- | 1,2 | B 29 C 45/26 |
| Y | PATENT ABSTRACTS OF JAPAN, Band 9, Nr. 11 (M-351)[1734], 18. Januar 1985; & JP-A-59 159 308 (NIPPON VICTOR K.K.) 08.09.1984 * Zusammenfassung * --- | 1,2 | |
| Y | US-A-2 526 877 (JURGELEIT) * Spalte 6, Zeilen 17-55; Figuren 1,2 * --- | 1,2 | |
| Y | US-A-4 706 924 (DE LAROSIERE) * Das ganze Dokument * --- | 1 | |
| Y | BE-A- 442 634 (NOWACK) * Das ganze Dokument * | 1 | |
| A | --- | 3 | RECHERCHIERTE SACHGEBIETE (Int. Cl.4) |
| A | US-A-2 316 298 (STRUNK) * Das ganze Dokument * ----- | 1 | B 29 C |

Der vorliegende Recherchenbericht wurde für alle Patentansprüche erstellt

| Recherchenort | Abschlußdatum der Recherche | Prüfer |
|---|---|---|
| DEN HAAG | 03-05-1989 | BOLLEN J.A.G. |